# EUROPEAN PATENT SPECIFICATION

(11) **EP 1 871 520 B1**
(45) Date of publication and mention of the grant of the patent: **09.07.2014**
(21) Application number: 06706133.3
(22) Date of filing: 23.03.2006
(51) Int. Cl.: B01J 19/32, B29C 47/00, B29C 47/06, B29C 47/12, B29C 47/24, B29C 47/30, C02F 3/10, B29L 28/00

(54) **A METHOD OF PRODUCING STRUCTURAL ELEMENTS OF A CONTACT FILTER BLOCK AND A CONTACT FILTER BLOCK**
VERFAHREN ZUR HERSTELLUNG VON BAUGRUPPEN FÜR EINEN KONTAKTFILTERBLOCK UND EIN KONTAKTFILTERBLOCK
PROCÉDÉ DE PRODUCTION DES ÉLÉMENTS TUBULAIRES POUR UN BLOC DE FILTRES DE CONTACT ET UN BLOC DE FILTRES DE CONTACT

(30) Priority: 23.03.2005 EP 05388027
(43) Date of publication of application: 02.01.2008
(73) Proprietor: Expo-Net Danmark A/S, 9800 Hjorring (DK)
(72) Inventor: KLINKBY, John, DK-9800 Hjørring (DK)
(74) Representative: Budde Schou A/S
(86) International application number: PCT/DK2006/000164
(87) International publication number: WO 2006/099873

(56) References cited:
- EP-A- 0 554 471
- EP-A- 1 142 837
- EP-A- 1 152 205
- DE-A1- 2 123 421
- DE-A1- 3 703 126
- GB-A- 1 473 456
- US-A- 3 262 682
- US-A- 3 758 359
- US-A- 4 083 667
- US-A- 5 225 116
- US-A- 5 772 870
- US-A- 5 882 510
- US-A- 6 096 407
- US-A1- 2004 022 973
- PATENT ABSTRACTS OF JAPAN vol. 004, no. 037 (M-004), 27 March 1980 (1980-03-27) & JP 55 009848 A (JAPAN STYRENE PAPER CO LTD), 24 January 1980 (1980-01-24)
- PATENT ABSTRACTS OF JAPAN vol. 004, no. 037 (M-004), 27 March 1980 (1980-03-27) & JP 55 009847 A (JAPAN STYRENE PAPER CO LTD), 24 January 1980 (1980-01-24)

## Description

The present invention relates to a method of producing structural elements of a contact filter block, a contact filter block obtained by the method and an apparatus for producing structural elements of a contact filter block using the method.

Related techniques have been described in publications such as US 2004/0022973, US3,758,359, US 4,089,667, US 5,015,123, US 5,772,870, US 5,882,510, US 6,217,800, US 6,333,088, US 6,342,158, US 6,551,818. EP 1 142 837 A and KR 9611746. Reference is made to the above mentioned patent publications and the above US patents are hereby incorporated in the present specification by reference in their entirety for all purposes. Further references include EP 1 142 837 which describes devices for treating waste water, and JP55009848 which describes methods for producing a net-like foam body. Techniques for cooling an extrudate are known from WO2004102092.

A first aspect of the present invention relates to a method of producing structural elements of a contact filter block using an apparatus that comprises:
a reservoir for storing granulate material having a first melting point, the reservoir having a first inlet and a first outlet, the granulate material including a foaming additive having a second melting point,
a heating and pressurising unit including a chamber having a second inlet and a second outlet, the second inlet in communication with the first outlet, a path of travel defined from the second inlet to the second outlet, the heating and pressurising unit comprising heating and pressurising elements distributed along the path of travel,
an extruder unit mounted downstream relative to the heating and pressurising unit at the second outlet, the extruder unit further including an extruder heating unit and two oppositely rotating extruder heads defining an extruder outlet, the extruder unit generating a mesh-type tubular structure,
a cooling unit mounted at the extruder unit for cooling the granulate material, and
a measuring and cutting device for measuring and cutting elements having a predetermined length within a specific interval
the method comprising the steps of:
   supplying the granulate material to the heating and pressurising unit from the reservoir via the second inlet,
   conveying the granulate material along the path of travel,
   heating the granulate material to an elevated temperature and pressurising the granulate material to an elevated pressure while conveying the granulate material along the path in the heating and pressurising unit, the heating and pressurising performed according to a specific heating and pressurising profile,
   transferring the heated and pressurised granulate material to the extruder unit,
   heating the granulate material within the extruder heating unit to a temperature above the first melting point and at or above the second melting point and producing a melted material from said granulate material,
   extruding the mesh-type tubular structure from the melted material, the heating of the granulate material causing an expansion of the foaming additive causing the mesh-type tubular structure to obtain an porous structure,
   cooling the extruded mesh-type tubular structure by the cooling unit according to a specific cooling profile thereby stopping or halting expansion of the melted material and/or the foaming additive and locking or fixating the porous structure of the mesh-type tubular structure, and
   cutting the mesh-type tubular structure using the measuring and cutting device into structural elements,
   the cutting of the mesh-type tubular structure including cutting the mesh-type tubular structure into discrete tubular elements and joining the tubular elements together side by side in the contact filter block, or alternatively,
   the cutting of the mesh-type tubular structure includes cutting the mesh-type tubular structure lengthwise and transversally for providing discrete elements, and forming the discrete element by the application of heat to the discrete elements into corrugated plate elements and arranging the corrugated plate elements on top of one another for transportation and joining the corrugated plate elements together back to back for providing the contact filter block, the porous structure having a surface of no less than 25-800 m²/m³, 90-100 m²/m³, 100-150 m²/m³, 150-200 m²/m³, such as 200-300 m²/m³.

The basic idea according to the present invention is to provide improvements relating to contact filter blocks, in particular the structural elements of the contact filter blocks for improving the properties of the contact filter blocks.

According to a first embodiment of the method according to the first aspect of the present invention, the cutting of the mesh-type tubular structure involves cutting the mesh-type tubular structure into individual or discrete tubular elements which are in a further step joined together side by side for producing a contact filter block. The individual or discrete tubular elements may be joined or sealed together by means of an adhesive or by the application of heat. The step of joining or assembling the individual and discrete tubular elements together may provide a contact filter block of the conventional cubic configuration or a substantially or box-like configuration or may alternatively provide a contact filter block having a base surface from which the individual or discrete tubular elements extend, preferably perpendicularly from the base surface. The base surface may have any relevant geometrical configuration such as a square, a rectangle, a circle, a triangle, a polygonal or a rhombic configuration.

According to an alternative or second embodiment of the method according to the first aspect of the present invention, the cutting of the mesh-type tubular structure involves transforming the mesh-type tubular structure into a plane structure by cutting lengthwise the mesh-type tubular structure and forming the plane web produced from the mesh-type tubular structure into a corrugated structure and further cutting transversally the corrugated structure into individual corrugated plate elements. In the process of producing the corrugated plate elements from the mesh-type tubular structure, the cutting lengthwise and the cutting transversally may be performed the one before the individual corrugated plate elements be deformed into the corrugated configuration by the application of heat and/or pressure to the element. Alternatively, the mesh-type tubular structure may be cut lengthwise in a separate step, whereupon for providing a web which is forced through a deforming die by the application of heat and/or pressure to the web for producing a corrugated web, which web is then cut into individual corrugated plate elements.

By the provision of corrugated structural plate elements, a further advantage in relation to the volume or space used for transportation is reduced as the individual corrugated plate elements may be positioned on top of one another occupying a fairly small space as no or substantially no space is left between the corrugated plate elements. At the side of the application, the corrugated plate elements are joined together back to back as the corrugations of the one corrugated plate element are joined to the corrugations of the adjacent corrugated plate elements, thereby providing in the inter space between the individual adjacent corrugations through-going apertures similar to the apertures produced by the tubular elements produced in accordance with the embodiment of the method according to the first aspect of the present invention.

In the present context, the term 'a foaming additive' is to be construed a generic term including any material present in solid, liquid or gaseous phase which allows the granulate material to be expanded for providing the porous structure of the mesh-type tubular structure produced in accordance with the method according to the first aspect of the present invention. Furthermore, granulate material is also to be construed including any material conventionally used in the polymer or plastics industry in the extrusion technical field and may include solid granulate material or polymer material included in a semi-pasteous or liquid state dependent on the actual melting point of the polymer composition.

It is further construed that any two-component polymer system, the one component constituting a component similar to the granulate material and the second component constituting a component similar to the foaming additive, which system provides as the two components are brought together, a physical and chemical reaction similar to the reaction caused by the straight forward addition of the foaming additive to the granulate material within the heating and pressurising unit is also to be contemplated part of the components used or usable in accordance with the teachings of the present invention.

The primary use of the structural elements produced according to the first aspect of the present invention is as elements in a filter block. The method is primarily directed towards the advantageous properties of the structural elements, namely the enlarged surface originating from the release of the foaming additive. The increase in surface area is contemplated to be 10-50%, 50% to 100% or even more compared to structural elements produced according to traditional production methods.

In the present specification, the term a tubular element is to be construed a geometrical element having a generator such as a circle, an ellipse, a square, a triangle or a rectangle and being generated by moving the geometrical generator along a generator line.

Furthermore, in the present context, the terms heating and pressurising unit and extruder unit are defining two sections of an apparatus conventionally known as an extruder. In the present context, the above terms heating and pressurising unit and extruder units are used solely for the purpose of defining specific properties and functions of the respective parts or sections of the extruder.

Furthermore, it is to be understood that the term extruder unit may be considered equivalent to or identical to the part of the conventional extruder commonly known as the die head.

Additionally, the method is contemplated to reduce the amount of material used for producing the structural elements by 20% to 50%, or even more, as other production methods for producing elements having a large surface requires larger amounts of material.

The large surface of the structural elements is contemplated to provide space for one, two or more colonies of bacteria, of aerobic and/or anaerobic types. The combination of aerobic and anaerobic bacteria is contemplated to ensure an advantageous rate of decomposition of waste or biological material in water. Also, the structural elements are contemplated to ensure that a large amount of bacteria will grow on the structural elements within a short period of time, such as within two weeks. It is contemplated that anaerobic bacteria will grow at, around or near the joints of the mesh-type structure and aerobic bacteria will grow at or on the parts between the joints.

Dependent on the heating of the granulate material and also dependent on the cooling of the extruded mesh-type tubular structure after extrusion may cause the individual strands of the mesh-type structure to be pressed together provided the strands are allowed to flow prior to cooling or alternatively, the individual strands of the mesh-type structure may be positioned on top of one another providing a more irregularly configurate type structure improving or increasing the joints of the mesh-type structure as compared to a structure in which the individual strands of the mesh-type structure are joint or pressed together into a shallow structure. It is, furthermore, contemplated that the more irregularly configurated structure may preserve the bacteria from being killed provided the contact filter block is exposed to toxic material, which are harmful or mortal to the bacteria.

The reservoir may be constituted by a simple funnel into which a granulate material is poured automatically, semi-automatically or manually. Alternatively, the reservoir may be a tank or the like, for continuously supplying granulate material to the apparatus. The reservoir may have at least two inlets and/or outlets for refilling the reservoir and for delivering the granulate material to the apparatus.

The heating and pressurising unit receives the granulate material from the reservoir and heats and pressurises the granulate material. The granulate material is heated up to but preferably not beyond the melting point of the granulate material. In alternative embodiments, the granulate material may be heated above or beyond the melting point.

The pressure to which the granulate material is pressurised is preferably within the interval 5 to 5000 bar, such as 5 to 50 bar, such as 50 to 1000 bar, such as 60 to 900 bar, such as 65 to 850 bar, such as 75 to 750 bar, such as 100 to 650 bar, such as 150 to 600 bar, such as 200 to 500 bar, such as 275 to 450 bar, such as 300 to 400 bar, such as 325 to 375 bar, such as 5 to 25 bar, such as 25 to 45 bar, such as 45 to 75 bar, such as 75 to 150 bar, such as 150 to 200 bar, such as 200 to 275 bar, such as 275 to 340 bar, such as 340 to 375 bar, such as 375 to 425 bar, such as 425 to 500 bar, such as 500 to 550 bar, such as 550 to 625 bar, such as 625 to 700 bar, such as 700 to 775 bar, such as 775 to 850 bar, such as 850 to 1000 bar, preferably around 350 bar.

The extruder heating unit provides an additional heating of the material. When the extruder heating unit heats the material, the foaming additive is contemplated to reach its foaming state and cause an expansion or creation of bubbles in the material, thereby creating a porous structure in the material.

In alternative embodiments, the extruder heating unit may be omitted, and the heating and pressurising unit may provide the needed heat for the foaming additive to expand.

For ensuring that the porous structure in the material is fixed or not changed, a cooling unit is provided. The cooling unit cools the material after it exits the extruder unit which is contemplated to stop the expansion of the foaming additive. The cooling may be obtained by using water, air, any fluid or liquid.

The extruder unit extrudes the mesh-type tubular structure from the heated material. In the presently preferred embodiment of the present invention, the extruder unit includes two oppositely rotating extruder heads or two parallel moving extruder heads, and the extruder heads defines the extruder outlet or die head. The opposite rotating extruder heads provide a relative motion between the rotating extruder heads as the one head may be stationary or be moving at a lower speed in the one direction as compared to the other head, or alternatively, the other head may be stationary or rotating oppositely to the first head or at a lower speed as compared to the first head.

Furthermore, for providing specifically configurated mesh-type tubular structure, the rotation may be oscillating or have varying speeds of one or both of the rotating extruder heads for providing a specific configuration of the mesh-type structure of the mesh-type tubular structure. Further, the extruder unit may include a multitude of nozzles each defining a cross-section having a substantially square, round, semi-round, rectangular, oblong, triangular, semi-hyperbolic, trapeze, inverse trapeze shaped or any combinations thereof, preferably round. In the present context, the term nozzle is used for describing the outlets of the extruder.

The measuring and cutting device is used for measuring and cutting the mesh-type tubular structure into discrete elements having a predetermined length within a specific interval, i.e. the resulting discrete elements may have an overall dimension with a measurement uncertainty. The measurements may be performed by machine visual inspection, mechanical determination of the length of the elements or any other automatic or semi-automatic methods or techniques.

In performing the method according to the first aspect of the present invention, the granulate material is supplied from the reservoir into the heating and pressurising unit. The heating and pressurising unit has an inlet through which the granulate material is supplied. The inlet may be in fluid communication with the reservoir.

The granulate material is conveyed along the path of travel defined in the heating and pressurising unit while heating units heat the granulate material. The heating is performed according to a specific heating profile.

In a first instance the heating elements may emit the same amount of heat at all positions along the path of travel, i.e. the same number of watts is emitted from all elements. In a second instance the heating element or elements may emit an increasing or decreasing amount of heat along the path of travel to ensure that the temperature of the granulate material is near the melting point at the outlet of the heating and pressurising unit. In a third instance, the specific heating profile may include one or more temperature peaks along the path of travel, such as short and/or longer bursts of heat emitted from the heating elements or element. The temperature peaks may be substantially equal or in the alternative different, both in terms of amount and width/duration, further alternatively, a combination of two or more substantially equal peaks and one or more peaks different from the two.

Further, the speed of which the granulate material is conveyed along the path of travel may be adapted to ensure that the temperature of the granulate material is near or at the melting point at the outlet of the heating and pressurising unit.

The heating and pressurising unit may also increase or decrease the pressure of the granulate material as it is conveyed from the inlet to the outlet of the heating and pressurising unit. The change in pressure may be performed according to a specific pressurising profile.

After the material has been extruded, the extruder heating unit may provide extra heat for heating and thereby causing the foaming additive to expand and thereby create a porous structure in the material. The cooling unit cools the material to a temperature below the temperature at which the foaming additive expands.

The granulate material used in the method according to the first aspect of the present invention is preferably HDPE. Further, the granulate material may further include an amount of PP or LDPE or a combination thereof, and/or may include PVS, NYLON, ABS or any other polymer materials.

According to the teachings of the present invention, the weight of the foaming additive may constitute 0, 1 % to 50%, such as 1% to 40%, such as 5% to 35%, such as 8% to 20%, such as 9% to 12%, such as 0,1% to 5%, such as 5% to 15%, such as 15% to 25%, such as 25% to 35%, such as 35% to 45%, such as 45% to 50%, preferably 3-5% or 5-10% of the weight of the granulate material.

According to the basic realisation of the method according to the present invention, the granulate material may be heated to 140 to 300 degrees centigrade, dependent on the polymer material or materials in question.

Additionally, the granulate material may further include a colouring additive, such as green, black or any other colour.

Particularly, the method according to the first aspect of the present invention may further comprise providing a feed screw in the path of travel, the feed screw defining a cylindrical or conical geometry. The feed screw may then constitute a conveyor for conveying the material from the inlet of the heating and pressurising unit to the output thereof. The geometrical structure of the feed screw may perform the pressurising of the material as it is conveyed along the path of travel.

A second aspect of the present invention relates to a contact filter block for the construction of filters for biological treatment of waste water comprising:
a plurality of individual structural elements which are joined together each having an mesh-type outside surface, the individual structural elements being produced using the method according to the first aspect of the present invention, said individual structural elements having a porous structure, said porous structure having a surface of no less than 25-800 m²/m³, such as 90-100 m²/m³, 100-150 m²/m³, 150-200 m²/m³, or 200-300 m²/m³.

Said plurality may comprise e.g. 4, 6, 8, 10, 12, 16 or even more individual structural elements, such as e.g. 25, 36, 64 or 100.

The porous structure of the contact filter block is contemplated to provide a large surface on which a multitude of bacteria may grow. The bacteria are then contemplated to break-down or decompose waste in water flowing through the contact filter block. The contact filter block may be positioned in the ground or in a waste water treatment facility.

In a basic realisation of the contact filter block according to the second aspect of the present invention. It is contemplated that the porous structure may have a surface of no less than 25-800 m²/m³, such as 90-100 m²/m³, 100-150 m²/m³, 150-200 m²/m³, or 200-300 m²/m³. As discussed earlier, the large surface area is contemplated to provide space for large amounts of bacteria for decomposing waste and/or biological material in water.

The contact filter block according to the second aspect may be produced by the method according to the first aspect of the present invention.

The surface roughness may be further described by the parameters Ra, Rz and Rmax. The surface roughness is measured in µm.

In a first alternative embodiment of the contact filter block according to the second aspect of the present invention in the plurality of individual structureal elements comprises
a plurality of tubular elements which are joined together each having an mesh-type outside surface, the tubular elements being produced using the method according to the first aspect of the present invention, and having a surface roughness within the interval 5 to

1000, such as 7 to 700, such as 10 to 600, such as 25 to 500, such as 50 to 450, such as 75 to 350, such as 100 to 300, such as 150 to 250, such as 7 to 15, such as 15 to 30, such as 30 to 50, such as 50 to 75, such as 75 to 150, such as 150 to 225, such as 225 to 300, such as 300 to 350, such as 350 to 400, such as 400 to 500, all measures being Ra, Rz and Rmax.

### In a second alternative embodiment of the contact filter block according to the second aspect of the present invention the plurality of individual structural elements comprises

a plurality of corrugated plate elements which are joined together having the corrugations of the one plate element facing the corrugations of adjacent plate element, each of said plate elements having a mesh type outside surface, said corrugated plate elements being produced due to the method according to the first aspect of the present invention, and having a surface roughness within the interval 5 to 1000, such as 7 to 700, such as 10 to 600, such as 25 to 500, such as 50 to 450, such as 75 to 350, such as 100 to 300, such as 150 to 250, such as 7 to 15, such as 15 to 30, such as 30 to 50, such as 50 to 75, such as 75 to 150, such as 150 to 225, such as 225 to 300, such as 300 to 350, such as 350 to 400, such as 400 to 500.

In a preferred embodiment of the present invention, the parameter Ra has a value in the interval 5 to 1000, such as 7 to 700, such as 10 to 600, such as 25 to 500, such as 50 to 450, such as 75 to 350, such as 100 to 300, such as 150 to 250, such as 7 to 15, such as 15 to 30, such as 30 to 50, such as 50 to 75, such as 75 to 150, such as 150 to 225, such as 225 to 300, such as 300 to 350, such as 350 to 400, such as 400 to 500, all measures being Ra, Rz and Rmax.

In a preferred embodiment of the present invention, the parameter Rz has a value in the interval 5 to 4000, such as 20 to 2000, such as 25 to 1800, such as 40 to 1500, such as 75 to 1300, such as 125 to 1200, such as 200 to 1100, such as 275 to 1000, such as 350 to 850, such as 400 to 700, such as 450 to 600, such as 500 to 550, such as 20 to 50, such as 50 to 100, such as 100 to 150, such as 150 to 225, such as 225 to 300, such as 300 to 375, such as 375 to 450, such as 450 to 550, such as 550 to 675, such as 675 to 775, such as 775 to 850, such as 850 to 950, such as 950 to 1100, such as 1100 to 1250, such as 1250 to 1400, such as 1400 to 1600, such as 1600 to 1800, such as 1800 to 2000, all measures being Ra, Rz and Rmax.

In a preferred embodiment of the present invention, the parameter Rmax has a value in the interval 5 to 5000, such as 30 to 3000, such as 40 to 2800, such as 50 to 2600, such as 75 to 2400, such as 150 to 2200, such as 200 to 2000, such as 275 to 1800, such as 375 to 1700, such as 450 to 1550, such as 550 to 1400, such as 650 to 1200, such as 775 to 1000, such as 850 to 950, such as 30 to 40, such as 40 to 50, such as 50 to 75, such as 75 to 100, such as 100 to 175, such as 175 to 275, such as 275 to 350, such as 350 to 475, such as 475 to 575, such as 575 to 700, such as 700 to 900, such as 900 to 1200, such as 1200 to 1500, such as 1500 to 1800, such as 1800 to 2000, such as 2000 to 2300, such as 2300 to 2600, such as 2600 to 2800, such as 2800 to 3000, all measures being Ra, Rz and Rmax.

The tubular elements of the contact filter block according to the first alternative embodiment of the second aspect of the present invention and similarly the corrugated plate elements of the contact filter block according to the second alternative embodiment of the second aspect of the present invention may be obtained according to the method defined in the first aspect of the present invention, and include the features of the contact filter block according to the second aspect.

A third aspect of the present invention relates to an apparatus for producing structural elements of a contact filter block, the apparatus comprising:
a reservoir for storing granulate material having a first melting point, said reservoir having a first inlet and a second inlet, said granulate material including a foaming additive having a second melting point,
a heating and pressurising unit including a chamber having a second inlet and a second outlet, the second inlet in communication with the first outlet, a path of travel defined from the second inlet to the second outlet, the heating unit comprising heating and pressurising elements distributed along the path of travel,
an extruder unit mounted downstream relative to the heating and pressurising unit at the second outlet, the extruder unit further including an extruder heating unit, the extruder unit including two oppositely rotating extruder heads defining an extruder outlet, the extruder unit generating a mesh-type tubular structure,
a cooling unit mounted at the extruder unit for rapidly cooling the mesh-type tubular structure, and a measuring and cutting device for measuring and cutting elements having a predetermined length within a specific interval.

The apparatus according to the third aspect may be used for performing the method according to the first aspect for the production of contact filter blocks according to the second aspect of the present invention.

The first, second, and third aspects are to be further described with reference to the attached drawings in which:
Fig. 1 a is a schematic illustration of an apparatus for producing a mesh-type tubular structure,
Fig. 1b is a schematic illustration of a first embodiment of an apparatus for processing the mesh-type tubular structure into tubular elements,
Fig. 1c is a schematic illustration of a second embodiment of processing the mesh-type tubular structure into corrugated plate elements,
Fig. 2 is a schematic illustration of a part of an extruder unit,
Fig. 3 is a schematic illustration of the extruder unit of fig. 2,
Fig. 4 is schematic illustrations of alternative embodiments of extruder unit outlets,
Fig. 5 is a schematic illustration of a plurality of tubular elements connected in a filter block,
Fig. 6 is a zoomed schematic illustration of a part of a tubular element,
Fig. 7a is a schematic illustration of a pile of corrugated plate elements, and
Fig. 7b is a schematic illustration of a plurality of corrugated plate elements connected in a filter block.

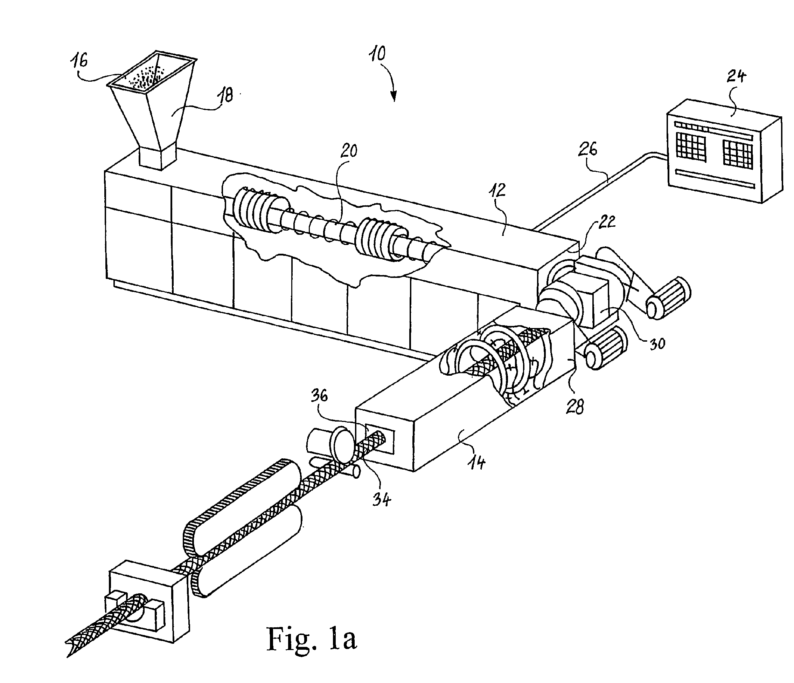

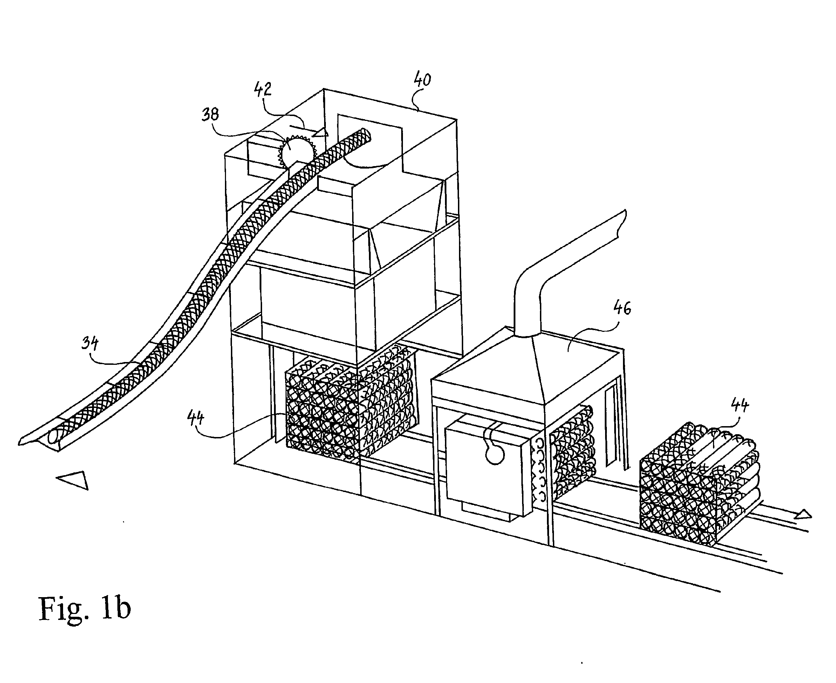

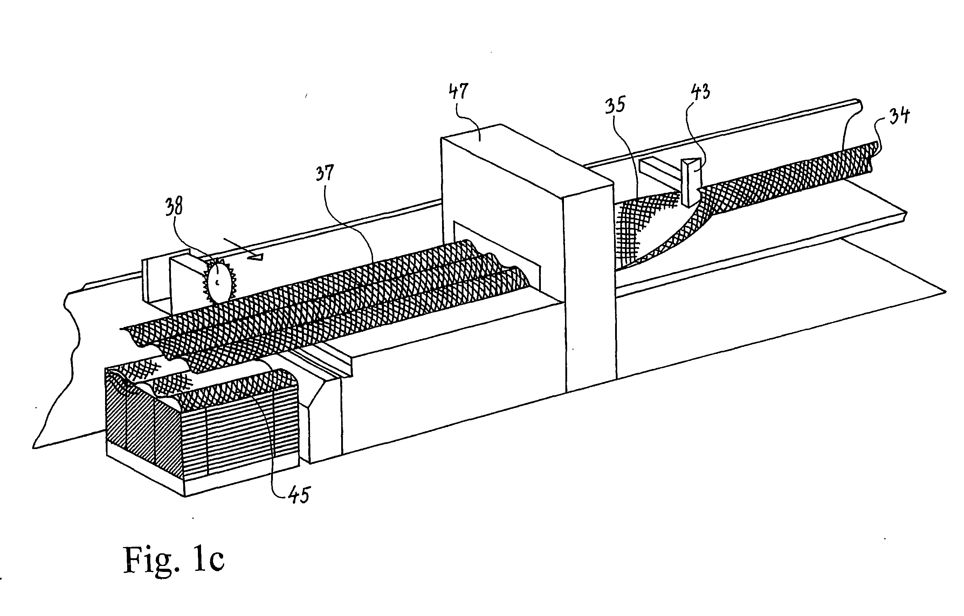

Fig. 1 a is a schematic illustration of an apparatus 10 for producing a mesh-type tubular structure. The apparatus 10 comprises a first section 12 and a second section 14. The first section 12 receives granulate material 16 via an inlet 18 constituted by a funnel. Alternatively, the inlet 18 may be in contact with a larger reservoir for continuously supplying granulate material 16 to the apparatus 10. The granulate material comprises a foaming additive that, when heated above a certain temperature, expands and thereby creates bobbles in the melted or soft granulate material. When the foaming additive expands the granulate material is probably not granulate any more, but a soft mass.

The first section 12 receives the granulate material which is then fed to a screw conveyor 20 defining an axis or path of travel along which the granulate material is transported. The screw conveyor 20 is positioned in the first section 12.

Along the path of travel defined by the screw conveyor 20, a number of heating elements, alternatively a single heating element, is distributed. The heating element or elements, not illustrated in Fig. 1a, heats the granulate material 16 while it is conveyed by the screw conveyor from the inlet of the first section 12 to an outlet 22 of the first section.

The granulate material 16 is heated to a temperature just below the melting point of the granulate material 16. In the presently preferred embodiment of the present invention, the screw conveyor 20 compresses the granulate material as it is conveyed along the path of travel.

The heating of the granulate material 16 is performed according to a specific heating profile. In one instance the heating elements may emit the same amount of heat at all positions along the path of travel and the speed of which the screw conveyor 20 conveys the granulate material 16 may be adapted to ensure that the temperature of the granulate material is above the melting point at the outlet 22.

In a second instance the heating element or elements may emit an increasing or decreasing amount of heat along the path of travel to ensure that the temperature of the granulate material 16 is near the melting point of the granulate material at the outlet 22.

Thirdly, the specific heating profile may include one or more temperature peaks along the path of travel, such as short or long bursts of heat emitting from the heating elements or element. The temperature peaks may be substantially equal, both in terms of amount and width/duration.

The screw conveyor 20 may be formed as a simple screw having a substantially constant diameter or height. In the alternative the screw conveyor 20 may be formed as a screw conveyor with gradually increasing or decreasing height so that the granulate material 16 is further compresses due to the gradually reduced size or space. In the embodiment where the screw conveyor 20 has a substantially constant height along the path of travel, the granulate material 16 may still be compressed, e.g. by the "new" or cold granulate material pushing the "old" or hot granulate material 16 located nearer the outlet 22 of the first section.

The operation of the heating elements and/or the screw conveyor is controlled by an external unit 24, e.g. a computer or specialised hardware and/or software monitoring the operation of the screw conveyor and/or the heating elements by receiving information regarding the number of revolutions per second of the screw conveyor and pressure and/or temperature information e.g. via sensors located inside the first section 12. The unit 24 may ensure that the temperature of the heating elements and/or the material is within predetermined ranges.

In Fig. 1a, the unit 24 is connected to the first section 12 via a cable 26 for transferring information and control signals back and forth between the unit 24 and the first section 12. Alternatively, the cable or wire 26 may be constituted by other links such as RF, IR, HF or other wireless transfer techniques.

From the outlet 22 of the first section 12, the heated and near-melted granulate material is transferred into the second section via an inlet 28. The material is fed to an extruder unit 30 including an additional heater unit, not illustrated, for heating the material above its melting point. As the material includes a foaming additive that is released above a certain temperature, the foaming material will enter a gaseous state thereby creating a porous structure in the material. The expansion or transfer of the foaming additive into gas is preferably done after the material has passed though the extruder unit 30.

To ensure that the porous structure is fixed, a cooling unit cools the material shortly after the porous structure has been established.

In Fig. 1a, the mesh-type tubular structure 34 exits the second section 14 via the outlet 36. The tubular mesh-structure 34 will be further processed as illustrated in Fig. 1b, or alternatively as illustrated in Fig. 1 c.

In Fig. 1b, the structure 34 is cut into individual tubular elements using a cutting saw 38 located in a tower 40, the cutting wheel being mounted on a reciprocating arm moving in direction of the arrow 42. The structure 34 is cut into smaller pieces that may be assembled in larger structures such as 44 which is a structure comprising 25 short pieces of the tubular mesh-structure 34. The 25 individual pieces of the tubular mesh-structure is then transferred into a heater unit 46 melting the ends of the pieces of the tubular mesh-structure so that the individual pieces are assembled and/or locked in a fixed structure which may then be used for purposes such as cleaning water, such as waste water.

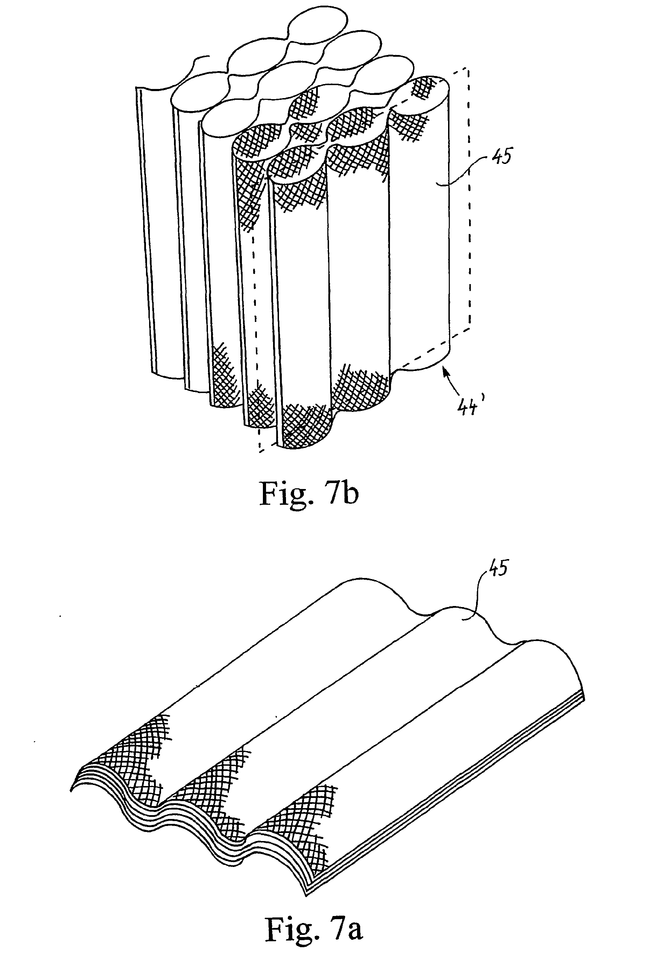

In Fig. 1c, the mesh-type tubular structure 34 is cut lengthwise by means of a cutting knife 36 causing the mesh-type tubular structure to be converted into a substantially planar structure as is illustrated by 35. The substantially planar structure is introduced into a heating and pressing die 47, in which the substantially planar structure 35 is converted into a corrugated structure, as is indicated by the reference numeral 37, whereupon the corrugated structure is introduced into a cutting station, in which the cutting saw 38 cuts the corrugated structure into individual corrugated plate elements, one of which is designated the reference numeral 45. The corrugated plate elements are to be described in greater details below with reference to Figs. 7a and 7b. In an alternative method of providing the corrugated plate element 45, the planar structure shown in Fig. 1c is cut into individual rectangular plane elements, which are then introduced into a set of forming and pressing tools providing the corrugated configuration.

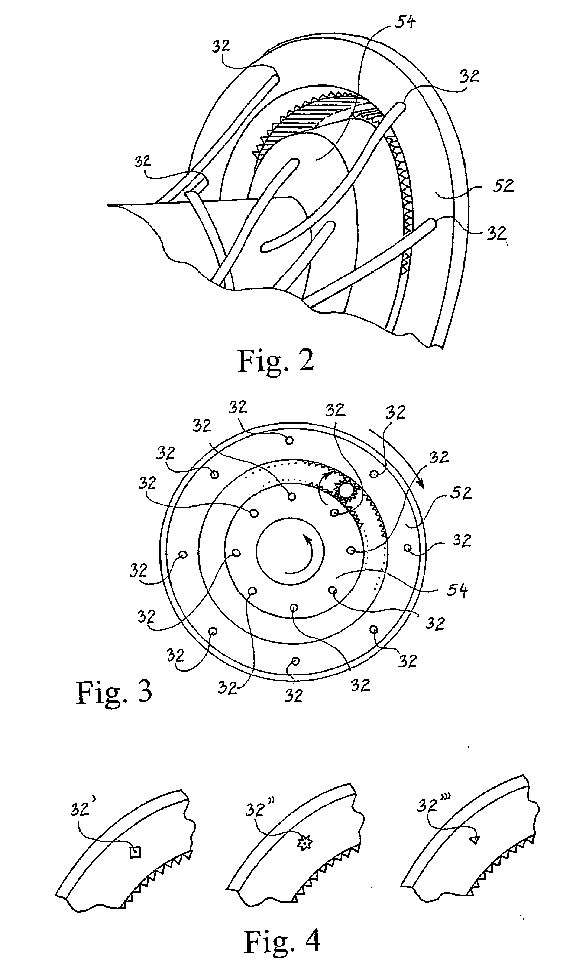

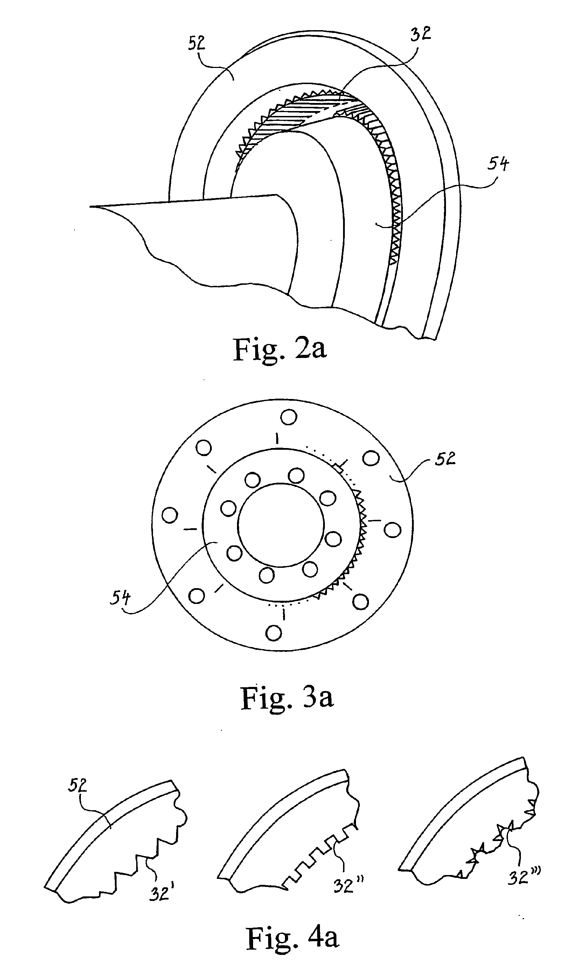

In the presently preferred embodiment of the present invention, the extruder unit 30 is constituted by two oppositely rotating parts illustrated in greater details in Figs. 2, 3 and 4.

As seen from Fig. 2, the extruded material exits the extruder unit at extruder outlets 32 distributed in a circle. The distribution of the extruder outlets 32 ensures along with the rotation of the extruder heads 52 and 54 that the resulting structure is a tubular mesh-type structure.

Fig. 3 schematically illustrates an extruder comprising two extruder heads 52 and 54. The extruder heads 52 and 54 are two oppositely rotating circular heads. In other embodiments, the extruder unit may comprise two or more parallel moving parts, two parts moving or rotating in the same direction, or parts not moving or rotating themselves.

In Fig. 4, three alternative geometrical configurations of the extruder outlets are illustrated, referenced 32', 32", 32"', respectively. In the presently preferred embodiment of the present invention, the extruder outlets 32 define a substantially circular geometrical cross section, however, as illustrated in Fig. 4, the extruder outlets may define a substantially square 32', star-shaped 32", triangular 32"' or any polygon configurations such as elliptical, rectangular, truncated pyramidal, inverse truncated pyramidal, hexagonal, pentagonal or any combinations thereof.

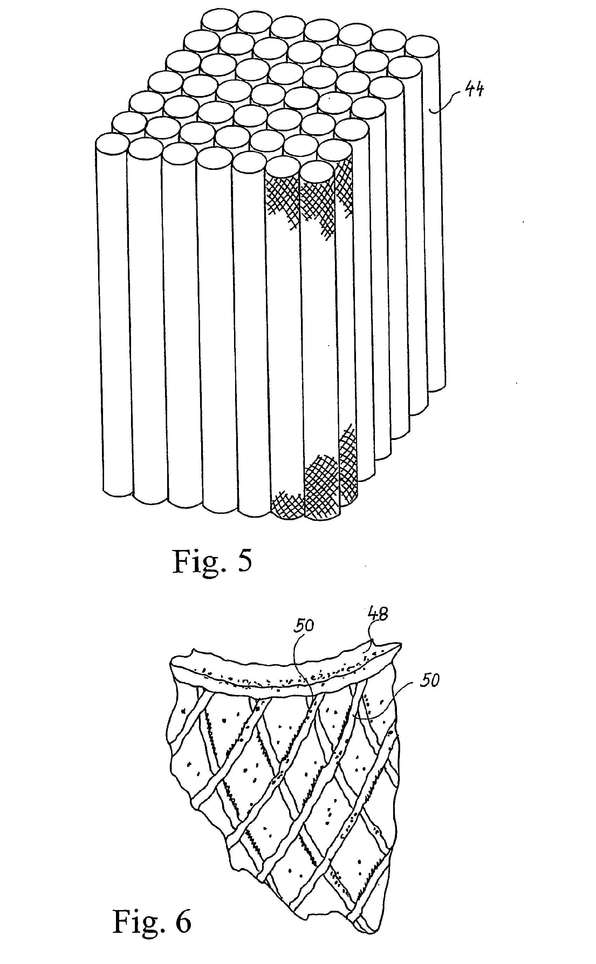

Fig. 5 is a schematic illustration of an assembly of pieces of the tubular mesh-structure 34, assembled into a simple structure 44. The individual mesh-structure elements are joined together at the ends of the structures, however embodiments wherein the elements are joined together at other locations along the longitudinal axis the elements may be envisioned as well as embodiments where the elements are joined at the entire lengths of the elements.

Fig. 6 is a schematic closer view of an element 48 illustrating the expanded surface of the threads 50 constituting the mesh-structure of the tubular element 48. The threads 50 have an expanded surface due to the manufacturing process as described in relation to Fig. 1 wherein the foaming additives release a gas creating bubbles in the material. The enlarges surface is contemplated to allow a great or large amount of bacteria to grow on the structure or thread, e.g. the bacteria located nearest the thread 50 will be covered by other bacteria thereby allowing substantially only anaerobic bacteria to grow on the thread 50 itself.

In Fig. 7a, a pile of individual corrugated plate elements 45 is shown, which pile constitutes a highly compact structure as compared to the structure 44, i.e. the contact filter block 44 shown in Fig. 5. The saving of space by the provision of the corrugated plate element 45 is contemplated to provide a further advantage of the contact filter block as compared to the conventional contact filter blocks known in the art. In Fig. 7b, a contact filter block 44' is shown, which contact filter block is assembled from the corrugated plate elements 45, also shown in Fig. 7a, as the corrugated plate elements 45 are joined together in Fig. 7b in a structure "back-to-back", as the corrugations of the one plate are joined to the opposite corrugations of the adjacent plate which has been turned upside down as compared to the pile shown in Fig. 7a. The structures 44' shown in Fig. 7b may be fixated by means of an adhesive or alternatively by the application of heat to the joined corrugations or at the end parts of the structure.

The combination of anaerobic and aerobic bacteria is contemplated to provide an improved cleaning effect on wastewater, as they each digest or decompose different types of waste.

## Claims

1. A method of producing a contact filter block (44) using an apparatus (10) comprising:
a reservoir (18) for storing granulate material (16) having a first melting point, said reservoir (18) having a first inlet and a first outlet, said granulate material (16) including a foaming additive having a second melting point,
a heating and pressurising unit (12) including a chamber having a second inlet and a second outlet (22), said second inlet in communication with said first outlet, a path of travel defined from said second inlet to said second outlet (22), said heating and pressurising unit (12) comprising heating and pressurising elements distributed along said path of travel,
an extruder unit (30) mounted downstream relative to said heating and pressurising unit (12) at said second outlet (22), said extruder unit (30) further including an extruder heating unit and two oppositely rotating extruder heads (52, 54) defining an extruder outlet (32), said extruder unit (30) generating a mesh-type tubular structure (34),
a cooling unit mounted at said extruder unit for rapidly cooling said granulate material, and
a measuring and cutting device (38) for measuring and cutting elements having a predetermined length within a specific interval
the method comprising the steps of:
supplying said granulate material (16) to said heating and pressurising unit (12) from said reservoir (18) via said second inlet,
conveying said granulate material (16) along said path of travel,
heating said granulate material (16) to an elevated temperature and pressurising said granulate material (16) to an elevated pressure while conveying said granulate material (16) along said path in said heating and pressurising unit 12), said heating and pressurising performed according to a specific heating and pressurising profile,
transferring said heated and pressurised granulate material (16) to said extruder unit (30),
heating said granulate material (16) within said extruder heating unit to a temperature above said first melting point and at or above said second melting point and producing a melted material from said granulate material (16),
extruding said mesh-type tubular structure (34) from said melted material, said heating of said granulate material (16) causing an expansion of said foaming additive causing said mesh-type tubular structure (34) to obtain an porous structure,
cooling said extruded mesh-type tubular structure (34) by said cooling unit according to a specific cooling profile thereby stopping or halting expansion of said melted material and/or said foaming additive and locking or fixating said porous structure of said mesh-type tubular structure, and
cutting said mesh-type tubular structure (34) using said measuring and cutting device (38) into structural elements,
said cutting of said mesh-type tubular structure (34) including cutting said mesh-type tubular structure (34) into discrete tubular elements and joining said tubular elements together side by side in said contact filter block (44), or alternatively
said cutting of said mesh-type tubular structure (34) includes cutting said mesh-type tubular structure (34) lengthwise and transversally for providing discrete elements, and forming said discrete element by the application of heat to said discrete elements into corrugated plate elements (45) and arranging said corrugated plate elements (45) on top of one another for transportation and joining said corrugated plate elements (45) together back to back for providing said contact filter block (44),
said porous structure having a surface of no less than 25-800 m²/m³, 90-100 m²/m³, 100-150 m²/m³, 150-200 m²/m³, such as 200 - 300 m²/m³.

2. The method according to claim 1, wherein said extruder unit (30) includes a multitude of nozzles (32) each defining a cross-section having a substantially square, round, semi-round, rectangular, oblong, triangular, semi-hyperbolic, trapeze, inverse trapeze or any combinations thereof.

3. The method according to any of the claims 1-2, wherein said first melting point is higher than, equal to or lower than said second melting point.

4. The method according to claim 3, wherein said granulate material (16) is HDPE and wherein said granulate material (16) further includes an amount of PP or LDPE or a combination thereof, and/or includes PVC, NYLON, ABS or any other polymer material.

5. The method according to any of the claims 1-4, wherein the weight of said foaming additive constitutes 0,1 to 50 %, such as 1 to 40 %, such as 5 to 35 %, such as 8 to 20 %, such as 9 to 12 %, such as 0,1 to 5 %, such as 5 to 15 %, such as 15 to 25 %, such as 25 to 35 %, such as 35 to 45 %, such as 45 to 50%, preferably 3-5% or 5-10 % of the weight of the granulate material (16).

6. The method according to any of the claims 1-5, wherein said granulate material (16) is heated to 140 to 300 degrees centigrade.

7. The method according to any of the claims 1-6 wherein said granulate material (16) further includes a colouring additive.

8. The method according to any of the claims 1-7 further comprising:
providing a feed screw (20) in said path of travel, said feed screw (20) defining a cylindrical or conical geometry.

9. The method according to any of the claims 1-8 wherein said heating and pressurising unit (12) pressurises said granulate material (16) to a pressure within the interval 5 to 5000 bar, such as 50 to 1000 bar, such as 60 to 900 bar, such as 65 to 850 bar, such as 75 to 750 bar, such as 100 to 650 bar, such as 150 to 600 bar, such as 200 to 500 bar, such as 275 to 450 bar, such as 300 to 400 bar, such as 325 to 375 bar, such as 5 to 25 bar, such as 25 to 45 bar, such as 45 to 75 bar, such as 75 to 150 bar, such as 150 to 200 bar, such as 200 to 275 bar, such as 275 to 340 bar, such as 340 to 375 bar, such as 375 to 425 bar, such as 425 to 500 bar, such as 500 to 550 bar, such as 550 to 625 bar, such as 625 to 700 bar, such as 700 to 775 bar, such as 775 to 850 bar, such as 850 to 1000 bar, preferably around 350 bar.

10. A contact filter block (44) for the construction of filters for biological treatment of waste water comprising:
a plurality of individual structural elements which are joined together each having an mesh-type outside surface, the individual structural elements being produced using the method according to any of the claims 1-9, said individual structural elements having a porous structure, said porous structure having a surface of no less than 25-800 m²/m³, 90-100 m²/m³, 100-150 m²/m³, 150-200 m²/m³, such as 200 - 300 m²/m³.

## Patentansprüche

1. Verfahren zur Herstellung eines Kontaktfilterblocks unter Verwendung einer Einrichtung umfassend:
einen Behälter (18) zum Lagern von Granulatmaterial (16) mit einem ersten Schmelzpunkt, wobei der Behälter (18) einen ersten Einlass und einen ersten Auslass aufweist, wobei das Granulatmaterial (16) ein Schaumadditiv mit einem zweiten Schmelzpunkt enthält,
eine eine Kammer enthaltende Heiz- und Druckeinheit (12), die einen zweiten Einlass und einen zweiten Auslass (22) aufweist, wobei der zweite Einlass mit dem ersten Auslass in Verbindung steht, einen vom zweiten Einlass zum zweiten Auslass (22) definierten Förderweg, wobei die Heiz- und Druckeinheit (12) längs des Förderwegs verteilte Heiz- und Druckelemente umfasst,
eine der Heiz- und Druckeinheit (12) am zweiten Auslass (22) nachgeordnete Extrudiereinheit (30), wobei die Extrudiereinheit (30) ferner eine Extrudierheizeinheit und zwei entgegengesetzt rotierende, einen Extrudierauslass (32) definierende Extrudierköpfe (52, 54) umfasst, wobei die Extrudiereinheit (30), wobei die Extrudiereinheit eine netzartige rohrförmige Struktur erzeugt,
eine an die Extrudiereinheit montierte Kühleinheit zum schnellen Kühlen des Granulatmaterials, und
eine Mess- und Schneidevorrichtung (38) zum Messen und Schneiden von Elementen mit einer vorgegebenen Länge innerhalb eines spezifischen Intervalls,
wobei das Verfahren die folgenden Schritte umfasst:
Zuführen des Granulatmaterials (16) aus dem Behälter (18) über den zweiten Einlass in die Heiz- und Druckeinheit (12),
Fördern des Granulatmaterials (16) längs des Förderwegs,
Erhitzen des Granulatmaterials (16) auf eine erhöhte Temperatur und Drücken des Granulatmaterials (16) auf einen erhöhten Druck, während das Granulatmaterial (16) längs des Weges in der Heiz- und Druckeinheit (12) gefördert wird, wobei das Heizen und Drücken nach einem spezifischen Heiz- und Druckprofil erfolgt,
Überführen des erhitzten und gedrückten Granulatmaterials (16) in die Extrudiereinheit (30),
Erhitzen des Granulatmaterials (16) innerhalb der Extrudierheizeinheit auf eine Temperatur über dem ersten Schmelzpunkt und/oder an oder über dem zweiten Schmelzpunkt und Herstellen eines geschmolzenen Materials aus dem Granulat-material (16),
Extrudieren der netzartigen rohrförmigen Struktur (34) aus dem geschmolzenen Material, wobei das Erhitzen des Granulatmaterials (16) eine Ausdehnung des Schaumadditivs verursacht, was bewirkt, dass die netzartige rohrförmige Struktur (34) eine poröse Struktur erzielt,
Kühlen der extrudierten netzartigen rohrförmigen Struktur (34) durch die Kühleinheit nach einem spezifischen Kühlprofil, wodurch die Ausdehnung des geschmolzenen Materials und/oder des Schaumadditivs eingestellt oder gestoppt wird, und die poröse Struktur der netzartigen rohrförmigen Struktur verschlossen oder fixiert wird, und
Schneiden der netzartigen rohrförmigen Struktur (34) unter Verwendung der Mess- und Schneidevorrichtung (38) in Baugruppen,
wobei das Schneiden der netzartigen rohrförmigen Struktur (34) Schneiden der netzartigen rohrförmigen Struktur (34) in diskrete rohrförmige Elemente und Verbinden der rohrförmigen Elemente nebeneinander im Kontaktfilterblock (44) umfasst, oder alternativ
wobei das Schneiden der netzartigen rohrförmigen Struktur (34) Schneiden der netzartigen rohrförmigen Struktur (34) längs und quer umfasst, um diskrete Elemente bereitzustellen, und Gestalten des diskreten Elements durch Zuführung von Hitze zu den diskreten Elementen zu gewellten Plattenelementen (45) und Anordnen der gewellten Plattenelementen (45) aufeinander zur Beförderung und Verbinden der gewellten Plattenelemente (45) Rücken an Rücken, um den Kontaktfilterblock (44) bereitzustellen,
welche poröse Struktur eine Oberfläche von wenigstens 25-800 m²/m³, 90-100 m²/m³, 100-150 m²/m³, 150-200 m²/m³, wie zum Beispiel 200 - 300 m²/m³ aufweist.

2. Verfahren nach Anspruch 1, wobei die Extrudiereinheit (30) eine Vielzahl von Düsen (32) umfasst, wobei jede einen Querschnitt definiert, der eine im Wesentlichen viereckige, runde, halbrunde, rechteckige, längliche, dreieckige, semihyperbolische, trapezförmige, umgekehrt trapezförmige oder beliebige Kombinationen daraus aufweist.

3. Verfahren nach einem der Ansprüche 1-2, wobei der erste Schmelzpunkt höher als, gleich oder niedriger als der zweite Schmelzpunkt ist.

4. Verfahren nach Anspruch 3, wobei das Granulatmaterial (16) HDPE ist, und wobei das Granulatmaterial (16) ferner eine Menge von PP oder LDPE oder eine Kombination daraus enthält, und/oder PVC, NYLON, ABS oder ein beliebiges Polymermaterial enthält.

5. Verfahren nach einem der Ansprüche 1-4, wobei das Gewicht des Schaumadditivs 0,1 bis 50 %, wie zum Beispiel 1 bis 40 %, wie zum Beispiel 5 bis 35 %, wie zum Beispiel 8 bis 20 %, wie zum Beispiel 9 bis 12 %, wie zum Beispiel 0,1 bis 5 %, wie zum Beispiel 5 bis 15 %, wie zum Beispiel 15 bis 25 %, wie zum Beispiel 25 bis 35 %, wie zum Beispiel 35 bis 45 %, wie zum Beispiel 45 bis 50%, bevorzugt 3-5% oder 5-10 % des Gewichts des Granulatmaterials (16) ausmacht.

6. Verfahren nach einem der Ansprüche 1-5, wobei das Granulatmaterial (16) auf 140 bis 300 Grad Celsius erhitzt wird.

7. Verfahren nach einem der Ansprüche 1-6, wobei das Granulatmaterial (16) ferner ein Farbadditiv enthält.

8. Verfahren nach einem der Ansprüche 1 - 7 ferner umfassend:
Bereitstellen einer Förderschnecke (20) im Förderweg, wobei die Förderschnecke (20) eine zylinderförmige oder kegelförmige Geometrie definiert.

9. Verfahren nach einem der Ansprüche 1-8, wobei die Heiz- und Druckeinheit (12) das Granulatmaterial (16) auf einen Druck innerhalb des Intervalls 5 bis 5000 bar, wie zum Beispiel 50 bis 1000, wie zum Beispiel 60 bis 900 bar, wie zum Beispiel 65 bis 850 bar, wie zum Beispiel 75 bis 750 bar, wie zum Beispiel 100 bis 650 bar, wie zum Beispiel 150 bis 600 bar, wie zum Beispiel 200 bis 500 bar, wie zum Beispiel 275 bis 450 bar, wie zum Beispiel 300 bis 400 bar, wie zum Beispiel 325 bis 375 bar, wie zum Beispiel 5 bis 25 bar, wie zum Beispiel 25 bis 45 bar, wie zum Beispiel 45 bis 75 bar, wie zum Beispiel 75 bis 150 bar, wie zum Beispiel 150 bis 200 bar, wie zum Beispiel 200 bis 275 bar, wie zum Beispiel 275 bis 340 bar, wie zum Beispiel 340 bis 375 bar, wie zum Beispiel 375 bis 425 bar, wie zum Beispiel 425 bis 500 bar, wie zum Beispiel 500 bis 550 bar, wie zum Beispiel 550 bis 625 bar, wie zum Beispiel 625 bis 700 bar, wie zum Beispiel 700 bis 775 bar, wie zum Beispiel 775 bis 850 bar, wie zum Beispiel 850 bis 1000 bar, bevorzugt etwa 350 bar drückt.

10. Kontaktfilterblock (44) für die Herstellung von Filtern zur biologischen Behandlung von Abwasser umfassend:
eine Vielzahl von miteinander verbundenen individuellen Baugruppen, wobei jede eine netzartige Außenfläche aufweist, wobei die individuellen Baugruppen unter Verwendung des Verfahrens nach einem der Ansprüche 1-9 hergestellt sind, wobei die individuellen Baugruppen eine poröse Struktur aufweisen, welche poröse Struktur eine Oberfläche von wenigstens 25-800 m²/m³, 90-100 m²/m³, 100-150 m²/m³, 150-200 m²/m³, wie zum Beispiel 200 - 300 m²/m³ aufweist.

## Revendications

1. Procédé de production d'un bloc de filtres de contact (44) utilisant un appareil (10) comprenant:
un réservoir (18) pour stocker de la matière granulée (16) ayant un premier point de fusion, ledit réservoir (18) ayant une première entrée et une première sortie, ladite matière granulée (16) comportant un additif moussant ayant un deuxième point de fusion,
une unité de chauffage et de pressurisation (12) comportant une chambre ayant une deuxième entrée et une deuxième sortie (22), ladite deuxième entrée étant en communication avec ladite première sortie, un trajet de cheminement défini de ladite deuxième entrée à ladite deuxième sortie (22), ladite unité de chauffage et de pressurisation (12) comprenant des éléments de chauffage et de pressurisation distribuées le long dudit trajet de cheminement,
une unité d'extrusion (30) montée en aval par rapport à ladite unité de chauffage et de pressurisation (12) à ladite deuxième sortie (22), ladite unité d'extrusion (30) comportant en outre une unité de chauffage d'extrusion et deux têtes d'extrusion tournant l'une à l'opposé de l'autre (52, 54) définissant une sortie d'extrusion (32), ladite unité d'extrusion (30) générant une structure tubulaire de type treillis (34),
une unité de refroidissement montée à ladite unité d'extrusion afin de refroidir rapidement ladite matière granulée, et
un dispositif de coupage et de mesurage (38) pour des éléments de mesurage et de coupage ayant une longueur prédéterminée d'un intervalle spécifique
le procédé comprenant les étapes de:
alimenter ladite matière granulée (16) à ladite unité de chauffage et de pressurisation (12) dudit réservoir (18) par ladite deuxième entrée,
transporter ladite matière granulée (16) le long dudit trajet de cheminement,
chauffer ladite matière granulée (16) à une température élevée et pressuriser ladite matière granulée (16) à une pression élevée tout en transportant ladite matière granulée (16) le long dudit trajet dans ladite unité de chauffage et de pressurisation (12), ledit chauffage et ladite pressurisation étant effectués selon un profil de chauffage et de pressurisation spécifique,
transférer ladite matière granulée (16), chauffée et pressurisée à ladite unité d'extrusion (30),
chauffer ladite matière granulée (16) à l'intérieur de ladite unité de chauffage d'extrusion à une température au dessus dudit premier point de fusion et au deuxième point de fusion ou au dessus de celui-ci et produire une matière fusionnée à partir de ladite matière granulée (16),
extruder ladite structure tubulaire de type treillis (34) de ladite matière fusionnée, ledit chauffage de ladite matière granulée (16) résultant en une expansion dudit additif moussant, ce qui amène ladite structure tubulaire de type treillis (34) à obtenir une structure poreuse,
refroidir ladite structure tubulaire de type treillis (34) par ladite unité de refroidissement selon un profil de refroidissement spécifique, ainsi arrêtant ou mettant fin à l'expansion de ladite matière fusionnée et/ou dudit additif moussant et verrouillant ou fixant ladite structure poreuse de ladite structure tubulaire de type treillis, et
couper ladite structure tubulaire de type treillis (34) en des éléments structuraux en utilisant ledit dispositif de mesurage et de coupage (38),
ledit coupage de ladite structure tubulaire de type treillis (34) comportant le coupage de ladite structure tubulaire de type treillis (34) en des éléments tubulaires discrets et joignant ensemble lesdits éléments tubulaires côte-à-côte dans ledit bloc de filtres de contact (44), ou alternativement
ledit coupage de ladite structure tubulaire de type treillis (34) comportant le coupage de ladite structure tubulaire de type treillis (34) dans le sens de la longueur et transversalement afin de fournir des éléments discrets, et la création dudit élément discret par l'application de chaleur audits éléments discrets dans des éléments de tôle ondulée (45) et la disposition desdits éléments de tôle ondulée (45) l'un par-dessus l'autre pour la transportation et la jointure desdits éléments de tôle ondulée (45) ensemble dos à dos pour fournir ledit bloc de filtres de contact (44),
ladite structure poreuse ayant une surface d'au moins 25 à 800 m²/m³, de 90 à 100 m²/m³, de 100 à 150 m²/m³, de 150 à 200 m²/m³, telle que de 200 à 300 m²/m³.

2. Procédé selon la revendication 1, dans lequel l'unité d'extrusion (30) comporte une multitude de buses (32), chacune définissant une section de coupe ayant une forme essentiellement carrée, ronde, demi-ronde, rectangulaire, oblongue, triangulaire, semi-hyperbolique, trapézoïdale, trapézoïdale inverse ou une quelconque combinaison de ces formes.

3. Procédé selon l'une quelconque des revendications 1 ou 2, dans lequel ledit premier point de fusion est au dessus dudit deuxième point de fusion, égal à celui-ci ou en dessous de celui-ci.

4. Procédé selon la revendication 3, dans lequel ladite matière granulée (16) est constituée par du polyéthylène à haute densité et dans lequel la matière granulée (16) comporte en outre une quantité de polypropylène ou de polyéthylène à basse densité ou d'une combinaison de ceux-ci, et/ou qui comporte du PVC, du NYLON, du ABS ou une quelconque autre matière polymère.

5. Procédé selon l'une quelconque des revendications 1 à 4, dans lequel le poids dudit additif moussant constitue de 0,1 à 50% du poids de la matière granulée (16), tel que de 1 à 40%, de 5 à 35%, de 8 à 20%, de 9 à 12%, de 0,1 à 5%, de 5 à 15%, de 15 à 25%, de 25 à 35%, de 35 à 45%, de 45 à 50%, de préférence de 3 à 5% ou de 5 à 10% du poids de la matière granulée (16).

6. Procédé selon l'une quelconque des revendications 1 à 5, dans lequel ladite matière granulée (16) est chauffée à 140 à 300 degrés centigrades.

7. Procédé selon l'une quelconque des revendications 1 à 6, dans lequel ladite matière granulée (16) comporte en outre un additif colorant.

8. Procédé selon l'une quelconque des revendications 1 à 7, comprenant en outre:
la fourniture d'un vis d'alimentation (20) dans ledit trajet de circulation/cheminement, ledit vis d'alimentation (20) définissant une géométrie cylindrique ou conique.

9. Procédé selon l'une quelconque des revendications 1 à 8, dans lequel ladite unité de chauffage et de pressurisation (12) pressurise ladite matière granulée (16) à une pression dans l'intervalle de 5 à 5000 bars, tel que de 50 à 1000 bars, tel que de 60 à 900 bars, tel que de 65 à 850 bars, tel que de 75 à 750 bars, tel que de 100 à 650 bars, tel que de 150 à 600 bars, tel que de 200 à 500 bars, tel que de 275 à 450 bars, tel que de 300 à 400 bars, tel que de 325 à 375 bars, tel que de 5 à 25 bars, tel que de 25 à 45 bars, tel que de 45 à 75 bars, tel que de 75 à 150 bars, tel que de 150 à 200 bars, tel que de 200 à 275 bars, tel que de 275 à 340 bars, tel que de 340 à 375 bars, tel que de 375 à 425 bars, tel que de 425 à 500 bars, tel que de 500 à 550 bars, tel que de 550 à 625 bars, tel que de 625 à 700 bars, tel que de 700 à 775 bars, tel que de 775 à 850 bars, tel que de 850 à 1000 bars, de préférence autour de 350 bars.

10. Bloc de filtres de contact (44) pour la construction de filtres pour le traitement biologique d'eaux usées comprenant:
une pluralité d'éléments structuraux individuels qui sont joints ensemble, chacun ayant une surface extérieure de type treillis, les éléments structuraux individuels étant produits en utilisant le procédé selon l'une quelconque des revendications 1 à 9, lesdits éléments structuraux individuels ayant une structure poreuse, ladite structure poreuse ayant une surface d'au moins 25 à 800 m²/m³, de 90 à 100 m²/m³, de 100 à 150 m²/m³, de 150 à 200 m²/m³, telle que de 200 à 300 m²/m³.
